# EUROPÄISCHE PATENTSCHRIFT

(11) **EP 0 900 550 B1**
(45) Veröffentlichungstag und Bekanntmachung des Hinweises auf die Patenterteilung: **27.11.2002**
(21) Anmeldenummer: 98115610.2
(22) Anmeldetag: 19.08.1998
(51) Int. Cl.: A61C 13/00

(54) **Verfahren zur Herstellung von Zahnprothesen**
Method for the manufactoring of dental prostheses
Méthode de fabrication de prothèses dentaires

(30) Priorität: 08.09.1997 DE 19739220
(43) Veröffentlichungstag der Anmeldung: 10.03.1999
(73) Patentinhaber: Ivoclar Vivadent AG, 9494 Schaan (LI)
(72) Erfinder: Foser, Hanspeter, 9496 Balzers (LI)
(74) Vertreter: Splanemann Reitzner Baronetzky Westendorp Patentanwälte

(56) Entgegenhaltungen:
- WO-A-94/07429
- DE-A- 3 443 063
- DE-A- 4 204 287
- DE-A- 4 323 074

## Beschreibung

Die Erfindung betrifft ein Verfahren zur Herstellung einer Zahnprothese gemäß dem Oberbegriff von Anspruch 1.

Die konventionelle Herstellung von Totalprothesen, die aus dem Mund des Patienten herausnehmbar sind, erfordert eine Vielzahl von aufwendigen Maßnahmen, um eine genaue Passung der Prothese zu gewährleisten. So ist es erforderlich, die Mundsituation abzuformen und ein Modell zu erstellen, und basierend auf der erfaßten Mundsituation wird eine Positivform beispielsweise in Gips erstellt, die für die Herstellung der Prothese verwendet wird. Hierbei sind zahlreiche besondere Schritte erforderlich; beispielsweise ist es notwendig, den Gips und die Zähne zu isolieren, um den polymerisierten Kunststoff und die Zähne, die aus Keramikmaterial oder ebenfalls aus Kunststoff bestehen können, aus dem Gips zu entfernen.

Für die Herstellung der Prothese wird eine Küvette verwendet, wobei Drücke von bis zu 3 Tonnen erforderlich sind. Trotz des bislang betriebenen Aufwands kommt es häufig zur sogenannten Bißerhöhung, also der Erhöhung der Stellung der Zähne.im Submillimeterbereich, wobei es beispielsweise aus "Dental-Labor" Heft 12/95, Seite 2003 ff. bekannt ist, einen Ringkanal zu verwenden, um die Bißerhöhung auf eine erträgliches Maß zu reduzieren.

Derartige Verfahren werden heute bei der Grundversorgung mit der Totalprothese regelmäßig angewendet. Ein weiteres bekanntes Verfahren, das Injektionsverfahren, bedingt zwar keine Bißerhöhung, ist jedoch technisch aufwendiger und erfordert eine sehr exaktg Handhabung von seiten des Zahntechnikers, allein schon, um die Blasenbildung zu vermeiden. Dieses Verfahren hat sich aufgrund des Aufwands nur in begrenztem Rahmen durchgesetzt.

Es sind verschiedene andere Verfahren vorgeschlagen worden, um die Gieß- und die Injektionsverfahren zu verbessern. So ist es beispielsweise aus der DE-OS 40 28 728 bekannt geworden, als Gießform ein Gel oder Silikon zu verwenden, um eine unmittelbare Lichtpolymerisation der Prothese in der Gießform zu ermöglichen. Dieses Verfahren ergibt jedoch unbefriedigende Prothesen, da das Gel oder Silikon zu weich ist, so daß es zu Verformungen kommt.

Ferner ist in der DE 195 105 50 A1 eine Konfektionsprothese vorgeschlagen worden, die patientenspezifisch unterfüttert werden soll. Die Bereithaltung von vorkonfektionierten Prothesen bedingt jedoch eine enorme Lagerhaltung, wenn eine einigermaßen befriedigende patientenspezifische Anpassung vorgenommen werden soll. Wenn lediglich wenige Modelle vorgehalten werden, muß entsprechend stark unterfüttert werden, was die Dicke der Prothese deutlich erhöht und dementsprechend für den Tragekomfort der Prothese unbefriedigend ist.

Ferner ist es auch bereits einmal vorgeschlagen worden, eine vorgeformte Prothesenbasis zu verwenden, die in einem verformbaren Zustand in den Mund des Patienten eingebracht und angepaßt werden soll. Hierzu wird eine Mischung unter hohem Druck und einer Temperatur von etwa 150°C verdichtet und dann auf etwa 60°C erwärmt und in den Mund des Patienten eingeführt. Es erfolgt dann eine Voranpassung, und es wird ferner ein Unterfütterungsmaterial aufgebracht und die Prothesenplatte erneut in den Mund des Patienten eingeführt. Dann wird die Prothesenplatte entnommen und teilweise gehärtet und erneut in den Mund des Patienten eingeführt und schließlich wieder entnommen und fertig gehärtet. Zähne können entweder vor oder nach dem Beginn oder Ende des Einführens der Prothese in den Mund des Patienten befestigt werden.

Dieses Verfahren bedingt demnach ein mindestens dreimaliges Einführen der Prothesenplatte in den Mund des Patienten, wobei der Patient auch noch mit unterschiedlichen Materialien konfrontiert wird. Der Patient hat demnach in der Tendenz den Eindruck, daß nachgebessert werden müßte, so daß die Patientenakzeptanz und damit auch die Akzeptanz des behandelnden Zahnarztes unbefriedigend ist. Trotz dieses Aufwands entstehen bei diesem Verfahren leicht Ungenauigkeiten, wobei zudem die Einführung von heißem Kunststoff von nahezu 60 °C in die Mundhöhle als unangenehm empfunden wird.

Aus der WO 94/07429 ist ein Verfahren zum Herstellen und Anpassen kompletter Gebiße bekannt, bei dem eine thermisch verformbare Gebißbasis vorgesehen ist an den edentulösen Kamm und das umgebende Gewebe angepaßt zu sein. Die innere und äußere Oberfläche dieser Basis wird durch ein Gußverfahren aus einer teigigen Kunsstoffverbindung geformt, die oberhalb einer Temperatur von 57,22 °C formbar ist und im Mund des Patienten verformt werden kann um eine Anpassung an die Gewebeoberflächen zu erreichen. Die Basis kann durch Aushärtung eines unpolymerisierten Gebißüberzugs an der Innenseite der Basis und Festmachen von Zähnen an der Außenseite der Basis in einem kompletten Gebiß integriert sein.

Aus der DE 42 04 287 ist eine Vorrichtung zum individuellen Ausrichten von Modellen an einem Dental-Artikulator bekannt, dessen als Basis dienendes unteres Gestellteil den Arm für das Unterkiefermodell aufweist, an dessen oberem Arm das Oberkiefermodell gelagert ist und bei dem die Modellträgerplatten jeweils dreh- und zugsicher mit den Artikulatorarmen lösbar befestigt sind. Für das wiederholbare individuelle Ausrichten sind Retentionselemente vorgesehen, die jeweils in der Modellträgerplatte entfernbar befestigt sind und in eine zum Aufnehmen von aushärtbarem Material vorgesehene und an den Raum zwischen Artikulatorarm und Modellträgerplatte grenzende Mulde ragen.

Aus der DE 34 43 063 ist ein Verfahren und eine Vorrichtung zum beweglichen Haltern von Gebismodellen bekannt. Ein Fuß trägt Stützstangen, diese je eine verschiebbare Hülse, letztere eine Führungseinrichtung und diese einen Halter. Der Fuß un der Halter sind jeweils mit einem zugenartigen Vorsprung ausgeführt, an dem die Haltepaltte für das untere bzw. ober Gebißmodell befestigt werden können. Die Haltepaltten sind in Langlöchern gewindemäßig festgelegt, so daß die Gebißmodelle auch in der Horizontalen relativ zueinander verschoben und somit in allen Richtungen aufeinader ausgerichtet werden können.

Daher liegt der Erfindung die Aufgabe zugrunde, ein Verfahren gemäß dem Oberbegriff von Anspruch 1 zu schaffen, das einerseits eine Bißerhöhung sicher vermeidet und andererseits gewährleistet, daß die Patientenakzeptanz verbessert ist wobei dennoch der Aufwand gegenüber dem üblichen Herstellverfahren von Zahnprothesen reduziert sein soll, so daß die Prothese wesentlich einfacher hergestellt werden kann.

Diese Aufgabe wird erfindungsgemäß durch Anspruch 1 gelöst. Vorteilhafte Weiterbildungen ergeben sich aus den Unteransprüchen.

Das erfindungsgemäße Verfahren bietet gegenüber den bisherigen Verfahren den enormen Vorteil, daß sich eine Totalprothese - oder.gegebenenfalls auch eine Teilprothese - mit hoher Präzision und dennoch bei gegenüber dem üblichen Stand der Technik verringertem Aufwand herstellen läßt. Erfindungsgemäß ist es hierzu vorgesehen, die Prothesenplatte aus verformbarem Kunststoff in den Mund des Patienten einzuführen und an den Kiefer zu adaptieren. Das lichthärtende Kunststoffmaterial wird vorgehärtet und dann entnommen, so daß die präzise Form der Basalfläche der Prothese bereits im Mund des Patienten festgelegt wird und damit eine erneute Einführung der Prothesenplatte, allein, um die Form "nachzubessern" entbehrlich ist. Bevorzugt wird die Prothesenplatte dann noch nachgehärtet, wobei es sich versteht, daß es alternativ auch vorgesehen sein kann, die vollständige Härtung der Prothesenplatte im Mund des Patienten vorzunehmen.

Bevorzugt wird einen Prothesenplatte zwischen zwei lichtdichten Folien in maximaler in der Praxis erforderlicher Größe geliefert, wobei die Platten vor Einführung in den Mund entweder patientenspezifisch ausgewählt oder durch Abtrennen von Rändern etwa auf die gewünschte Größe gebracht werden können. Ein seitlicher Überstand kann später bei Bedarf ohne weiteres entfernt werden.

Überraschend ergibt die erfindungsgemäße Lösung eine verbesserte Präzision gegenüber dem üblichen Stand der Technik, wobei dies auch auf die Ungenauigkeiten zurückzuführen ist, die durch die Abdrucknahme und Modellherstellung und die sich daran anschließende Herstellung der Prothese über eine Injektionsverfahren oder ein Gießverfahren mit Küvette entstehen und erfindungsgemäß vermieden werden können.

Das erfindungsgemäße Verfahren ermöglicht die Verwendung handelsüblicher Artikulatoren oder gegebenenfalls Bißlagenträger sowie die handelsübliche Bißlagenbestimmung. Gemäß einem besonders vorteilhaften Gesichtspunkt der Erfindung läßt sich die Prothesenplatte oder Prothesenbasis über einen speziellen Sockel leicht entfernbar aber dennoch präzise gehalten einbringen, wobei die Basalfläche bevorzugt mit Silikon oder einer anderen elastischen Masse gefüllt wird und diese Masse formschlüssig in einen entsprechenden Sockel des Artikulators eingreift. Die Silikonmasse kann später ohne weiteres entfernt werden, ermöglicht aber dennoch die geforderte Präzision bei der Ausrichtung im Artikulator.

Gemäß einer besondersvorteilhaften Ausgestaltung der Erfindung werden die Zähne in wachsähnlichem Kunststoffmaterial aufgestellt. Es erfolgt dann eine Überprüfung der Zahnaufstellung beziehungsweise gegebenenfalls eine Korrektur, wobei erfindungsgemäß besonders günstig ist, daß der Kunststoff zusammen mit der endgültigen Polymerisierung per Lichthärtung aushärtet. Es versteht sich, daß anstelle dessen auch eine konventionelle Aufstellung in Vorwalltechnik mit Hilfe von Wachs möglich ist, das dann später ausgebrüht und durch Kunststoff ersetzt werden kann. Der hierfür erforderliche Kunststoff kann bevorzugt in einer Tube in Pastenform leicht handhabbar bereitgehalten werden.

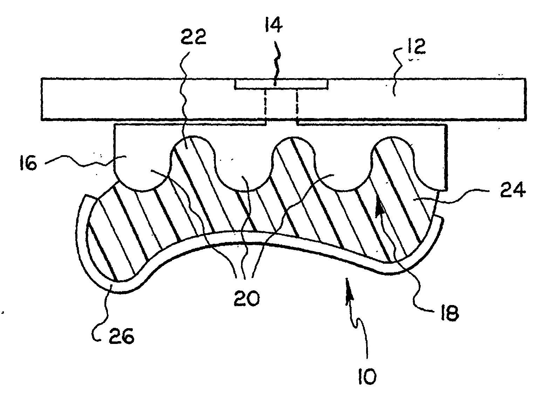

Weitere Einzelheiten, Vorteile und Merkmale ergeben sich aus der nachfolgenden Beschreibung eines Ausführungsbeispiels anhand der Zeichnung.

Es zeigt:

Die einzige Figur der Zeichnung einen partiell dargestellten Artikulator, zur Ausführung eines Schritts des erfindungsgemäßen Verfahrens.

Bei dem erfindungsgemäßen Verfahren wird zunächst eine vorgefertigte Prothesenplatte oder Prothesenbasis, die für den zahnlosen Oberkiefer oder Unterkiefer bestimmt ist, patientenspezifisch ausgewählt, wobei die vorgefertigten, halbkreisoder U-förmigen Platten etwa 1,5-3 mm stark sein können. Die Prothesenplatte besteht aus einem Polymethylmethacrylat/Methylmethacrylat, das verformbar und lichthärtend ist.

Das Material wird so ausgewählt, daß die Anforderungen hinsichtlich der leichten Verformbarkeit, der genauen Detailwiedergabe und langen Lagerstabilität erfüllt werden, wobei zudem die Geschmacksneutralität und das Fehlen von Gewebeirritationen sichergestellt sein sollen. Die Prothesenbasis wird etwa bei Körper- oder Raumtemperatur in den Mund des Patienten eingeführt und angedrückt, so daß sich die Basalfläche exakt an den Gaumen beziehungsweise Unterkiefer des Patienten anformt.

Gemäß einer modifizierten Ausgestaltung des erfindungsgemäßen Verfahrens ist es vorgesehen, daß nach dieser Erstadaption teilweise ein pastenförmiger Kunststoff aufgebracht wird, der der Unterfütterung dient, wodurch dann eine Feinadaption erfolgt.

Noch im Mund des Patienten wird die Prothesenplatte dann mit einem Lichthärtgerät, beispielsweise dem Gerät "Vivalux" der Firma IVOCLAR AG, Liechtenstein, gehärtet, zumindest so weit, daß eine Verformung bei der Handhabung und Entfernung der Prothese aus dem Mund nicht mehr geschehen kann. Dieses Verfahren ergibt den besonderen Vorteil, daß bereits im Mund im Grunde die exakte Form vorliegt, so daß die durch das Herausnehmen entstehenden Fehler, aber auch die Fehler bei der Modellabformung, sicher vermieden werden.

Nach der Entnahme aus dem Mund des Patienten wird die Prothesenplatte in einen speziell adaptierten Artikulator eingesetzt, beispielsweise den Artikulator STRATOS 200 der Firma IVOCLAR AG, Liechtenstein.

Der obere Teil des Artikulators 10 weist eine Trägerplatte 12 auf, die eine Zentralbefestigung 14 aufnimmt. Die Trägerplatte 12 kann auch verstellbar angeordnet sein, so daß auf verschieden große Prothesenplatten besser ausgerichtet werden kann.

Die Zentralbefestigung ermöglicht die sichere Lagerung eines speziellen erfindungsgemäßen Sockels 16. Der Sockel 16 weist auf seiner Unterseite eine profilierte Oberfläche 18 mit Vorsprüngen 20 und Vertiefungen 22 auf, die einander abwechseln. Die Oberfläche 18 ist hinterschneidungsfrei und damit auch günstig herzustellen. Sie dient der seitlich formschlüssigen und vertikal reibschlüssigen Lagerung einer Masse 24, die bevorzugt elastisch und insbesondere aus Silikon ausgebildet ist.

Die Masse 24 ist andererseits in der geformten Prothesenplatte 26 aufgenommen, wobei die Aufbringung so erfolgt, daß die etwa schalenförmige Prothesenplatte 26 mit der Masse 24 gut gefüllt wird und diese dann an den Sockel 16 angedrückt wird. Die Masse 24 dringt dann in die Vertiefungen 22 ein und haftet dann so lange, wie es gewünscht ist, kann jedoch andererseits durch seitliches Abkippen wieder leicht entnommen werden. In gleicher Weise kann die Masse 24 aus der Prothesenplatte 26 rückstandsfrei entfernt werden.

Diese Art der Montage der Prothesenplatte 26 erlaubt die sichere Fixierung am Artikulator, so daß die Aufstellung der Zähne und die weiteren Schritte in bekannter und bewährter Weise erfolgen kann.

Die Zähne können entweder als Zahnblocks, die vorfabriziert flexibel miteinander verbunden geliefert werden, oder als Einzelzähne aufgestellt werden, wobei es auch möglich ist, nach Aufstellung der Zähne eine Einprobe im Mund vorzunehmen.

Die Aufstellung kann entweder über Wachs, das später auszubrühen ist und in bekannter Vorwall-Technik durch Kunststoff zu ersetzen ist, oder gleich in pastenförmigem, lichthärtbarem und wachsähnlichem Kunststoff erfolgen, und gegebenenfalls kann die Aufstellung korrigiert werden.

Nach der endgültigen Aufstellung werden die Zähne mit Silikon oder einem anderen Material wie z.B. Gips verschlüsselt, also gegenüber der Prothesenbasis fixiert.

Nach der insofern vorgenommenen Fertigstellung der räumlichen Dimensionen der Prothese wird die Prothese endgehärtet und gegebenenfalls vergütet sowie lackiert und poliert. Es versteht sich, daß gewünschtenfalls auch eine Charakterisierung über ein Bemalen von Zähnen möglich ist. Beispielsweise die Darstellung von rot entzündeten Interdentalpapillen möglich oder es kann ein grau-blau verfärbter Zahnfleischsaum simuliert werden.

## Patentansprüche

1. Verfahren zum Herstellen von Zahnprothesen, bei welchem eine verformbare Prothesenplatte in den Mund eines Patienten eingeführt und zum Aushärten gebracht wird, und bei welchem die Prothesenplatte mit vorgefertigten Zähnen bestückt wird, **dadurch gekennzeichnet, daß** nach Durchführung der patientenspezifischen Verformung der Prothesenplatte im Mund des Patienten mindestens eine Voraushärtung vorgenommen wird, wobei die Prothesenplatte vor der Verwendung nicht vollständig polymerisiert und bei Mundtemperatur verformbar ist.

2. Verfahren nach Anspruch 1, **dadurch gekennzeichnet, daß** ein biokompatibler Kunststoff für die Prothesenplatte ausgewählt wird, der verformbar ist.

3. Verfahren nach Anspruch 2, **dadurch gekennzeichnet, daß** der Kunststoff ohne weitere Unterfütterung an die Mundsituation adaptierbar ist.

4. Verfahren nach einem der vorhergehenden Ansprüche, **dadurch gekennzeichnet, daß** für die Prothesenplatte ein lichthärtendes Kunststoffmaterial verwendet wird, das noch im Mund des Patienten nach der Adaption vorgehärtet wird.

5. Verfahren nach einem der vorhergehenden Ansprüche, **dadurch gekennzeichnet, daß** die Prothesenplatte als fertig konfektioniertes Halbprodukt hergestellt wird und nach Adaption im Mund des Patienten und Härtung basalseitig mit einem elastischen Material gefüllt wird.

6. Verfahren nach Anspruch 5, **dadurch gekennzeichnet, daß** das elastischen Material ein Silikon ist.

7. Verfahren nach Anspruch 5, **dadurch gekennzeichnet, daß** die Prothesenplatte ausgewählt wird.

8. Verfahren nach einem der vorhergehenden Ansprüche, **dadurch gekennzeichnet, daß** die an die Mundsituation adaptierte Prothesenplatte nach an sich bekannter Bisslagenbestimmung an einem Bisslagenträger oder in einem Artikulator über einen Sockel befestigt wird.

9. Verfahren nach Anspruch 8, **dadurch gekennzeichnet, daß** der Sockel Vorsprünge oder Retentionen aufweist, die für den Eingriff in eine verformbare Masse bestimmt sind, die auf der Bäsalseite der Prothesenplatte aufgebracht ist.

10. Verfahren nach Anspruch 8, **dadurch gekennzeichnet, daß** die verformbare Masse ein Silikon ist.

11. Verfahren nach einem der vorhergehenden Ansprüche, **dadurch gekennzeichnet, daß** die Zähne auf der Prothesenplatte in konventioneller Weise aufgestellt werden.

12. Verfahren nach einem der Ansprüche 1 bis 10, **dadurch gekennzeichnet, daß** die Zähne als Zahnkombinationen, die je flexibel miteinander verbunden sind, auf der Prothesenplatte aufgestellt werden.

13. Verfahren nach einem der vorhergehenden Ansprüche, **dadurch gekennzeichnet, daß** die Zähne in Wachs oder wachsähnlichem Kunststoffmaterial aufgestellt werden.

14. Verfahren nach Anspruch 13, **dadurch gekennzeichnet, daß** die Zähne umgestellt werden und der Kunststoff polymerisiert wird.

15. Verfahren nach Anspruch 14, **dadurch gekennzeichnet, daß** die Zähne nach Überprüfung der Bißlage umgestellt werden.

16. Verfahren nach Anspruch 14 und/oder 15, dadurch gekennzeich net, daß der Kunststoff anstelle von Wachs eingebracht wird.

17. Verfahren nach einem der vorhergehenden Ansprüche, **dadurch gekennzeichnet, daß** die Zähne mit einem elastischen Material oder mit einem aushärtenden Material verschlüsselt werden.

18. Verfahren nach Anspruch 17, **dadurch gekennzeichnet, daß** das elastische Material ein Silikon ist und/oder das aushärtende Material ein Gips ist.

19. Verfahren nach Anspruch 17 und/oder 18, **dadurch gekennzeichnet, daß** dann das eingebrachte Wachs ausgebrüht und durch Kunststoff ersetzt wird und dann die fertige Prothese ausgehärtet und poliert wird.

20. Verfahren nach Anspruch 19, **dadurch gekennzeichnet, daß** der Kunstoff pastenförmig ist.

21. Verfahren nach einem der vorhergehenden Ansprüche, **dadurch gekennzeichnet, daß** der anstelle des ausgebrühten Wachses einzubringende Kunststoff in einer Tube oder Spritze verbrauchsfertig vorbereitet wird.

22. Verfahren nach einem der vorhergehenden Ansprüche, **dadurch gekennzeichnet, daß** zur Erzielung einer Oberfläche mit möglichst geringer Rauhtiefe und zur Oberflächenkonditionierung ein Lack aufgebracht wird.

## Claims

1. A method of producing dental prostheses, in which a deformable prosthesis plate is introduced into a patient's mouth and is cured, and in which the prosthesis plate is provided with prefabricated teeth, **characterised in that** after carrying out patient-specific deforming of the prosthesis plate in the patient's mouth at least one precuring is carried out, wherein the prosthesis plate is not fully polymerised prior to use and is deformable at mouth temperature.

2. A method according to Claim 1, **characterised in that** a biocompatible plastics material which is deformable is chosen for the prosthesis plate.

3. A method according to Claim 2, **characterised in that** the plastics material can be adapted to the mouth situation without further inner lining.

4. A method according to any one of the preceding Claims, **characterised in that** a light-curing plastics material is used for the prosthesis plate, which is precured in the patient's mouth after the adaptation.

5. A method according to any one of the preceding Claims, **characterised in that** the prosthesis plate is produced as a ready-prepared semifinished product and after adaptation in the patient's mouth and curing is filled on the basal side with an elastic material.

6. A method according to Claim 5, **characterised in that** the elastic material is a silicone.

7. A method according to Claim 5, **characterised in that** the prosthesis plate is selected.

8. A method according to any one of the preceding Claims, **characterised in that** the prosthesis plate adapted to the mouth situation, after per se known biting position determination, is fastened to a biting position carrier or in an articulator via a pedestal.

9. A method according to Claim 8, **characterised in that** the pedestal has projections or retaining means which are intended for engagement in a deformable material which is applied on the basal side of the prosthesis plate.

10. A method according to Claim 8, **characterised in that** the. deformable material is a silicone.

11. A method according to any one of the preceding Claims, **characterised in that** the teeth are set up on the prosthesis plate in a conventional manner.

12. A method according to Claim 1 to 10, **characterised in that** the teeth are set up on the prosthesis plate as tooth combinations which in each case are joined flexibly together.

13. A method according to any one of the preceding Claims, **characterised in that** the teeth are set up in wax or wax-like plastics material.

14. A method according to Claim 13, **characterised in that** the teeth are turned round and the plastics material is polymerised.

15. A method according to Claim 14, **characterised in that** the teeth are turned round after checking the biting position.

16. A method according to Claim 14 and/or 15, **characterised in that** the plastics material is introduced instead of wax.

17. A method according to any one of the preceding Claims, **characterised in that** the teeth are keyed with an elastic material or with a curing material.

18. A method according to Claim 17, **characterised in that** the elastic material is a silicone and/or the curing material is a gypsum.

19. A method according to Claim 17 and/or 18, **characterised in that** the wax introduced is then scalded and replaced with plastics material, and then the finished prosthesis is cured and polished.

20. A method according to Claim 19, **characterised in that** the plastics material is in paste form.

21. A method according to any one of the preceding Claims, **characterised in that** the plastics material to be introduced instead of the scalded wax is prepared ready for use in a tube or syringe.

22. A method according to any one of the preceding Claims, **characterised in that** a lacquer is applied so as to achieve a surface with as low as possible roughness height and for surface conditioning.

## Revendications

1. Procédé de fabrication de prothèses dentaires dans lequel une plaque prothétique déformable est introduite dans la bouche d'un patient puis amenée à durcir, et dans lequel la plaque prothétique est munie de dents préfabriquées, **caractérisé en ce qu'**après la réalisation du moulage de la plaque prothétique spécifique au patient dans la bouche du patient au moins un durcissement préalable est effectué, sachant que la plaque prothétique n'est pas totalement polymérisée avant l'utilisation et est déformable à température buccale.

2. Procédé selon la revendication 1, **caractérisé en ce qu'**un plastique biocompatible, déformable, est choisi pour la plaque prothétique.

3. Procédé selon la revendication 2, **caractérisé en ce que** le plastique est adaptable sans autre rebasage à la situation buccale.

4. Procédé selon l'une quelconque des revendications précédentes, **caractérisé en ce qu'**un matériau plastique photo-durcissant pour la plaque prothétique est utilisé, qui est encore pré-durci dans la bouche du patient après l'adaptation.

5. Procédé selon l'une quelconque des revendications précédentes, **caractérisé en ce que** la plaque prothétique est fabriquée en tant que produit confectionné semi-fini et remplie du côté basal d'un matériau élastique après adaptation dans la bouche du patient et après durcissement.

6. Procédé selon la revendication 5, **caractérisé en ce que** le matériau élastique est une silicone.

7. Procédé selon la revendication 5, **caractérisé en ce que** la plaque prothétique est choisie.

8. Procédé selon l'une quelconque des revendications précédentes, **caractérisé en ce que** la plaque prothétique adaptée à la situation buccale est fixée sur un support de position occlusale ou dans un articulateur par l'intermédiaire d'un socle selon une détermination de position occlusale connue.

9. Procédé selon la revendication 8, **caractérisé en ce que** le socle présente des saillies ou des rétentions qui sont prévues pour une prise dans une masse déformable et qui sont aménagées du côté basal de la plaque prothétique.

10. Procédé selon la revendication 8, **caractérisé en ce que** la masse déformable est une silicone.

11. Procédé selon l'une quelconque des revendications précédentes, **caractérisé en ce que** les dents sont montées de façon conventionnelle sur la plaque prothétique.

12. Procédé selon l'une des revendications 1 à 10, **caractérisé en ce que** les dents sont montées sur la plaque prothétique sous forme de combinaisons de dents qui sont toutes reliées entre elles de façon flexible.

13. Procédé selon l'une quelconque des revendications précédentes, **caractérisé en ce que** les dents sont montées dans de la cire ou dans un matériau plastique semblable à la cire.

14. Procédé selon la revendication 13, **caractérisé en ce que** les dents sont ré-arrangées et le plastique polymérisé.

15. Procédé selon la revendication 14, **caractérisé en ce que** les dents sont ré-arrangées après vérification de la position occlusale.

16. Procédé selon la revendication 14 et/ou 15, **caractérisé en ce que** le plastique est utilisé à la place de la cire.

17. Procédé selon l'une quelconque des revendications précédentes, **caractérisé en ce que** les dents sont verrouillées avec un matériau élastique ou avec un matériau durcissant.

18. Procédé selon la revendication 17, **caractérisé en ce que** le matériau élastique est une silicone et/ou le matériau durcissant est un plâtre.

19. Procédé selon la revendication 17 et/ou 18, **caractérisé en ce que** la cire utilisée est échaudée et remplacée par du plastique puis la prothèse finie durcie et polie.

20. Procédé selon la revendication 19, **caractérisé en ce que** le plastique est sous forme de pâte.

21. Procédé selon l'une quelconque des revendications précédentes, **caractérisé en ce que** le plastique à insérer à la place de la cire échaudée est prêt à l'emploi, préparé dans un tube ou un aérosol.

22. Procédé selon l'une quelconque des revendications précédentes, **caractérisé en ce qu'**une laque est utilisée pour obtenir une surface avec les aspérités les plus réduites possibles et pour le conditionnement de la surface.
